# EUROPÄISCHE PATENTANMELDUNG

(11) **EP 2 910 586 A1**
(43) Veröffentlichungstag der Anmeldung: **26.08.2015**
(21) Anmeldenummer: 14190394.8
(22) Anmeldetag: 27.10.2014
(51) Int. Cl.: C08G 18/78, C08G 18/79, C08G 18/24, C08G 18/32

(54) **Transparente Polyurethane mit hoher Glasübergangstemperatur Tg**

(30) Priorität: 21.02.2014 EP 14156071
(71) Anmelder: Bayer MaterialScience AG, 51373 Leverkusen (DE)
(72) Erfinder: Matner Mathias Dr., 41464 Neuss (DE); Casselmann Holger Dr., 51519 Odenthal (DE); Zhuang Wei Dr., 40789 Monheim (DE); Achten Dirk Dr., 51375 Leverkusen (DE); Ehlers Michael, 47829 Krefeld (DE)
(74) Vertreter: BIP Patents

(57) **Zusammenfassung**

Die vorliegende Erfindung betrifft ein Polyurethan ausschließlich aufgebaut aus einer Polyisocyanat-Komponente und einer Polyol-Komponente, wobei die PolyisocyanatKomponente aus einem oder mehrere Polyisocyanaten besteht und die PolyisocyanatKomponente eine durchschnittliche NCO-Funktionalität pro Molekül von ≥ 3 aufweist und die Polyol-Komponente aus einem oder mehrere Polyolen besteht und die Polyol-Komponente eine durchschnittliche OH-Funktionalität pro Molekül von ≥ 3 und einen OH-Gehalt ≥ 25 Gew.-%. aufweist.. Weitere Gegenstände der Erfindung sind ein Verfahren zur Herstellung des erfindungsgemäßen Polyurethans, ein optisches Element, enthaltend oder bestehend aus einem erfindungsgemäßen Polyurethan sowie die Verwendung eines erfindungsgemäßen Polyurethans zur Lichtleitung, Lichtstreuung und / oder Lichtlenkung.

## Beschreibung

Die vorliegende Erfindung betrifft ein transparentes Polyurethan mit einer hohen Glasübergangstemperatur Tg.

Zur Herstellung von optischen Elementen wie Lichtleitern, Lichtstreuern oder Linsen werden Materialien benötigt, die transparent sind, d.h. die eine möglichst hohe Durchlässigkeit für elektromagnetische Wellen insbesondere im für Menschen sichtbaren Spektralbereich von 400 bis 800 nm aufweisen. Auf Grund der bei vielen Lichtquellen wie Glühlampen aber auch bei LEDs während der Lichterzeugung mit entstehenden Wärme, ist es weiterhin von erheblicher Bedeutung, dass die optischen Elemente bzw. die zu deren Herstellung eingesetzten Materialien eine hohe thermische Belastbarkeit und mechanische Stabilität aufweisen. Das bedeutet konkret, dass sich die Materialien auch bei einer signifikanten Erwärmung beispielsweise nicht verformen dürfen, da ansonsten etwa die Funktion einer Linse verloren gehen kann. Gleichzeitig müssen sie auch bei Normaltemperaturen eine ausreichende Härte aufweisen, damit sie mechanischen Belastungen standhalten.

Die zunehmende Verwendung von LEDs als Lichtquellen hat drüber hinaus einen erheblichen Bedarf für neue Materialien generiert, die einerseits den vorstehenden Anforderungen genügen und andererseits zum Verkapseln bzw. Eingießen von LEDs geeignet sind.

Aufgabe der vorliegenden Erfindung war es daher ein Material bereit zu stellen, das transparent ist, eine hohe thermische Belastbarkeit und mechanische Stabilität aufweist und darüber hinaus auch zum Verkapseln von Lichtquellen wie LEDs geeignet ist.

Diese Aufgabe wird erfindungsgemäß durch ein Polyurethan ausschließlich aufgebaut aus einer Polyisocyanat-Komponente und einer Polyol-Komponente, wobei die Polyisocyanat-Komponente aus einem oder mehreren Polyisocyanaten besteht und die Polyisocyanat-Komponente eine durchschnittliche NCO-Funktionalität pro Molekül von ≥ 3 aufweist und die Polyol-Komponente aus einem oder mehreren Polyolen besteht und die Polyol-Komponente eine durchschnittliche OH-Funktionalität pro Molekül von ≥ 3 und einen OH-Gehalt ≥ 25 Gew.-%. aufweist, gelöst.

Es wurde überraschenderweise gefunden, dass derartige Polyurethane eine hohe Transparenz aufweisen. So zeigen sie bei Messungen gemäß der im experimentellen Teil beschrieben Methode Transmissionen von mehr als 80 %. Darüber hinaus weisen die erfindungsgemäßen Polyurethane auch eine ungewöhnlich hohe Wärmestabilität auf. Gemäß der im experimentellen Teil beschriebenen Methode konnten für die erfindungsgemäßen Polyurethane Glasübergangstemperaturen von mehr als 80 °C bestimmt werden. Damit eignen sie sich hervorragend zur Herstellung von optischen Elementen wie Lichtleitern, Lichtstreuern oder Linsen, die einer erhöhten Temperaturbelastung ausgesetzt werden sollen. Weiterhin wurden für die erfindungsgemäßen Polyurethane gemäß der im experimentellen Teil beschriebenen Methode Shore D Härten von mehr als 70 ermittelt, was die gute mechanische Stabilität der Polymere belegt. Zusätzlich können die erfindungsgemäßen Polyurethane auch leicht zum Verkapseln von Lichtquellen wie LEDs verwendet werden.

Im Rahmen der vorliegenden Erfindung werden als Polyurethane organische Verbindungen angesehen, die Urethangruppen -NH-CO-O- aufweisen.

Unter einem Polyisocyanat wird eine organische Verbindung verstanden, die NCO-Gruppen aufweist.

Die NCO-Funktionalität der Polyisocyanat-Komponente kann berechnet werden, indem die Gesamtanzahl aller NCO-Gruppen der Polyisocyanate, aus der die Polyisocyanat-Komponente besteht, durch die Anzahl aller Moleküle der Polyisocyanat-Komponente geteilt wird.

Als Polyol wird vorliegend ein organische Verbindung verstanden, die OH-Gruppen aufweist.

Die OH-Funktionalität der Polyol-Komponente kann berechnet werden, indem die Gesamtanzahl aller OH-Gruppen der Polyole, aus der die Polyol-Komponente besteht, durch die Anzahl aller Moleküle der Polyol-Komponente geteilt wird.

Der OH-Gehalt gibt in Gewichtsprozent an, wie groß der Anteil des Molekulargewichts der OH-Gruppen am Gesamtmolekulargewicht der Polyol-Komponente ist.

Gemäß einer ersten bevorzugten Ausführungsform ist vorgesehen, dass die Polyisocyanat-Komponente eine NCO-Funktionalität ≤ 4 und / oder die Polyol-Komponente eine OH-Funktionalität ≤ 6 aufweist.

Erfindungsgemäß geeignete Polyisocyanate sind beispielsweise alle dem Fachmann bekannten organischen aliphatischen, cycloaliphatischen, aromatischen oder heterocyclischen Polyisocyanate. Besonders bevorzugt ist, wenn alle Polyisocyanate eine OH-Funktionalität ≥ 2 aufweisen.

Bevorzugt ist auch, wenn das Polyisocyanat eine aliphatische Verbindung ist. Ebenfalls bevorzugt ist, wenn die Polyisocyanat-Komponente ausschließlich aus aliphatischen Polyisocyanaten besteht.

Beispiele für geeignete Polyisocyanate sind die Oligomeren von aliphatischen Di- oder Triisocyanaten, wie Hexandiisocyanat (Hexamethylendiisocyanat, HDI), Pentandiisocyanat, Butandiisocyanat, 4,4'-Methylenbis(cyclohexylisocyanat), 3,5,5-Trimethyl-1-isocyanato-3-isocyanatomethylcyclohexan (Isophorondiisocyanat, IPDI), 4-Isocyanatomethyl-1,8-octandiisocyanat, 1,3-Bis(isocyanatomethyl)benzol (XDI), hydriertes Xylylendiisocyanat sowie hydriertes Toluoldiisocyanat.

Als Oligomere werden die Addukte der vorstehend genannten Di- und/oder Triisocyanate bezeichnet. Diese können aus der Anlagerung von Isocyanatgruppen untereinander zu Uretdionen und/oder Isocyanuraten und /oder aus Reaktionsprodukten und deren Folgeprodukten von Isocyanatgruppen mit Wasser und Aminen sowie mit Alkoholen entstehen, wobei die Anzahl der umgesetzten Di- oder Triisocyanate pro Molekül Oligomer mindestens zwei beträgt. Die Oligomere enthalten weiterhin reaktive Isocyanat-Gruppen. Die Oligomere im Sinne der vorliegenden Erfindung sind darüber hinaus als Verbindungen definiert, deren Anteil mit mehr als elf umgesetzten Di- oder Triisocyanate pro Molekül kleiner als 40 Gew.-%, bevorzugt kleiner als 25 Gew.-% ist.

Die Polyisocyanat-Komponente kann insbesondere einen NCO-Gehalt ≥ 15 Gew.-% und ≤ 55 Gew.-%, bevorzugt von ≥ 18 Gew.-% und ≤ 50 Gew.-% und besonders bevorzugt von ≥ 20 Gew.-% und ≤ 30 Gew.-% aufweisen. Der NCO-Gehalt gibt dabei an, wie viel Gewichtsprozent das Molekulargewicht der NCO-Gruppen am Gesamtmolekulargewicht der Polyisocyanat-Komponente beträgt.

Gemäß einer weiteren bevorzugten Ausführungsform ist wenigstens ein Polyisocyanat ein Biuret, ein Uretdion oder ein Isocyanurat eines Di- oder Triisocyanat. Bevorzugt ist dabei das Di- oder Triisocyanat aus der Gruppe Hexandiisocyanat, Isophorondiisocyanat, 4,4'-Methylen-bis(cyclohexylisocyanat), Xylylendiisocyanat, Tetramethylxylylendiisocyanat, , hydriertes Xylylendiisocyanat, hydriertes Toluoldiisocyanat, Pentandiisocyanat oder 4-Isocyanatomethyl-1,8-octandiisocyanat ausgewählt.

Ganz besonders bevorzugt ist, wenn als Polyisocyanat ein Isocyanurat der Di- oder Triisocyanate verwendet wird. Noch weiter bevorzugt ist, wenn als Polyisocyanat ein Isocyanurat von Hexandiisocyanat oder Isophorondiisocyanat oder ein Gemisch deren Isocyanurate verwendet wird.

Erfindungsgemäß geeignete Polyole sind beispielsweise alle dem Fachmann bekannten organischen aliphatischen, cycloaliphatischen, aromatischen oder heterocyclischen Polyole. Besonders bevorzugt ist, wenn alle Polyole eine OH-Funktionalität ≥ 2 aufweisen.

Beispiele für geeignete Polyole sind 1,2,10-Decantriol, 1,2,8-Octantriol, 1,2,3-Trihydroxybenzol, Glycerol (Glycerin), 1,1,1-Trimethylolpropan, 1,1,1-Trimethylolethan, Pentaerythrit oder Zuckeralkohole.

Besonders bevorzugte Polyole sind die rein aliphatischen Verbindungen Glycerol (Glycerin), 1,1,1-Trimethylolpropan, 1,1,1-Trimethylolethan, Pentaerythrit oder Zuckeralkohole.

In Weiterbildung der Erfindung ist vorgesehen, dass die Polyol-Komponente einen OH-Gehalt ≥ 25 Gew.-% und ≤ 60 Gew.-%, bevorzugt von ≥ 30 Gew.-% und ≤ 60 Gew.-%, und besonders bevorzugt von ≥ 35 Gew.-% und ≤ 60 Gew.- aufweist.

Das molekulare Verhältnis von Polyisocyanat zu Polyol kann so eingestellt werden, dass das Verhältnis der NCO-Gruppen zu OH-Gruppen, im Bereich von 0,95:1,00 bis 1,20:1,00 und bevorzugt im Bereich von 1,05:1,00 und besonders bevorzugt bei 1,00:1,00 liegt.

Ein weiterer Gegenstand der Erfindung ist ein Verfahren zur Herstellung eines erfindungsgemäßen Polyurethans, bei dem die Polyisocyanat-Komponente und die Polyol-Komponente vermischt und gegebenenfalls ein Katalysator und / oder Additive hinzugegeben und gegebenenfalls erwärmt wird.

Die Polyisocyanat-Komponente und die Polyol-Komponente können beispielsweise mit Hilfe von verschiedenen dem Fachmann bekannten statischen oder dynamischen Mischaggregaten vermischt werden.

Bei einer bevorzugten Ausführungsform des erfindungsgemäßen Verfahrens ist vorgesehen, dass die Polyisocyanat-Komponente und die Polyol-Komponente vor dem Vermischen auf eine Temperatur von 30 bis 90 °C, bevorzugt von 35 bis 80 °C und besonders bevorzugt von 40 bis 60 °C erwärmt werden.

Ebenfalls bevorzugt ist, wenn bezogen auf Summen der Massen der Polyisocyanat-Komponente und der Polyol-Komponente 0,001 bis 0,100 Gew.-%, bevorzugt 0,002 bis 0,050 Gew.-% und besonders bevorzugt 0,005 bis 0,030 Gew.-% Katalysator hinzugegeben wird.

Beispiele für geeignete Katalysatoren sind die typischen Urethanisierungskatalysatoren wie sie beispielweise in Becker / Braun, Kunststoffhandbuch Band 7, Polyurethane, Kapitel 3.4 angegeben werden. Als Katalysator kann insbesondere eine Verbindung ausgewählt aus der Gruppe der Amine und Metallorganyle, bevorzugt aus der Gruppe der Zinnorganyle und der Bismutorganyle und besonders bevorzugt Dibutylzinndilaurat verwendet werden.

Der Katalysator kann sowohl mit geeigneten Lösemitteln verdünnt als auch unverdünnt einer der beiden Komponenten zugegeben werden. Bevorzugt wird der Katalysator ohne Zusatz von Lösemittel mit einer Komponente vorgemischt, bevor diese mit der anderen Komponente vermischt wird.

Als weitere Komponenten können verschiedene Additive wie zum Beispiel Flammschutzmittel, Farbstoffe, Fluoreszenzstoffe, transparente Füllstoffe, Lichtschutzmittel, Antioxidantien, Thixotropiermittel, Entformungsmittel, Haftvermittler, licht-streuende Mittel und gegebenenfalls weitere Hilfs- und Zusatzstoffe zugegeben werden.

Optional werden die Einsatzstoffe vor Vermischung durch geeignete Verfahren getrocknet und entgast, um unerwünschte Nebenreaktionen und Blasenbildung zu verhindern.

Bei dem erfindungsgemäßen Verfahren ist es vorteilhaft, wenn die Polyisocyanat-Komponente und die Polyol-Komponente sowie gegebenenfalls die weiteren Komponenten wasserfrei vermischt werden, da geringe Mengen an Feuchtigkeit zur Blasenbildung führen können. Der Restwassergehalt in der Mischung ist daher so gering zu halten, dass keine Störungen auftreten. Bevorzugt kann der Wassergehalt der Mischung < 0,5 Gew.-% sein.

Das erfindungsgemäß Verfahren kann auch unter Verwendung von bis zu 40 Gew.-% an organischen Lösemitteln durchgeführt werden, bevorzugt ist jedoch, wenn keine oder nur geringe Mengen an Lösemitteln verwendet werden.

Noch ein weiterer Gegenstand der Erfindung ist ein optisches Element, enthaltend oder bestehend aus einem erfindungsgemäßen Polyurethan.

Die erfindungsgemäßen optischen Elemente können durch verschiedene Herstellverfahren wie zum Beispiel Gießen, Rapid Injection Moulding (RIM), Beschichten, Tauchen oder andere geeigneten Verfahren hergestellt werden.

Bevorzugt kann es sich bei dem optischen Element um einen Lichtleiter, einen Lichtstreuer, oder eine Linse handeln.

Beispiele für die erfindungsgemäßen optischen Elemente können Linsen in Automobilscheinwerfern, optische Korrekturlinsen, Lichtleiter, Verkapselungen von LEDs mit gegebenenfalls eingearbeiteten Fluoreszenzstoffen (in der Industrie üblicherweise als "Phosphor" bezeichnet) oder andere transparente Bauteile sein. Ebenfalls Gegenstand der Erfindung ist die Verwendung eines erfindungsgemäßen Polyurethans zur Lichtleitung, Lichtstreuung und oder Lichtlenkung.

Die Erfindung wird nachfolgend anhand von Beispielen näher erläutert

### Allgemeine Angaben:

Alle Prozentangaben beziehen sich, sofern nicht abweichend angegeben, auf Gewichtsprozent (Gew.-%).

Die zur Zeit der Versuchsdurchführung herrschende Umgebungstemperatur von 23 °C wird als RT (Raumtemperatur) bezeichnet.

Die NCO- oder OH-Funktionalität der verschiedenen Rohstoffe wurde jeweils rechnerisch ermittelt.

### Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Transmission

Die Transmission der ausgehärteten Polyurethansysteme wurde mit einem Byk-Gardner haze-gard plus Gerät entsprechend der ASTM-Norm D-1003 bestimmt. Die Messung wurde an Proben mit einer Schichtdicke von 1 cm durchgeführt.

### Bestimmung der Glasübergangstemperatur

Die Glasübergangstemperatur (Tg) wurde mit Hilfe der DMA-Methode an freien Filmen bei einer Anregungsfrequenz von 1 Hz bestimmt.

### Bestimmung der shore Härte

Die Prüfung der shore-Härte erfolgte an den 2 mm dicken Membranen der ausgehärteten Polyurethansysteme gemäß DIN 53505.

### Einsatzstoffe

Desmodur N 3600 ist ein HDI-Trimerisat (NCO-Funktionalität >3) mit einem NCO-Gehalt von 23,0 Gew.-% von der Fa. Bayer MaterialScience. Die Viskosität beträgt 1200 mPas (DIN EN ISO 3219/A.3).

Desmodur N 3200 ist ein niedrigviskoses HDI-Biuret (NCO-Funktionalität >3) mit einem NCO-Gehalt von 23,0 Gew.-% von der Fa. Bayer MaterialScience. Die Viskosität beträgt 2500 mPas (DIN EN ISO 3219/A.3).

Desmodur N 3400 ist ein HDI-Uretdion (NCO-Funktionalität <3) mit einem NCO-Gehalt von 21,8 Gew.-% von der Fa. Bayer MaterialScience. Die Viskosität beträgt 175 mPas (DIN EN ISO 3219/A.3).

Desmodur N 3900 ist ein niedrigviskoses aliphatisches Polyisocyanat-Harz auf Basis Hexamethylendiisocyanat (NCO-Funktionalität >3) mit einem NCO-Gehalt von 23,5 Gew.-% von der Fa. Bayer MaterialScience. Die Viskosität beträgt 730 mPas (DIN EN ISO 3219/A.3).

Desmodur XP 2489 ist ein HDI/IPDI-Trimerisat (NCO-Funktionalität >3) mit einem NCO-Gehalt von 21,0 Gew.-% von der Fa. Bayer MaterialScience. Die Viskosität beträgt 22500 mPas (DIN EN ISO 3219/A.3).

Glycerin (1,2,3-Propantriol) wurde mit einer Reinheit von 99,0 % von der Fa. Calbiochem bezogen.

1,1,1-Trimethylolpropan (TMP) wurde mit einer Reinheit von 97,0% von der Fa. Aldrich bezogen.

Desmophen VP LS 2249/1 ist ein verzweigtes (2<F<3), kurzkettiges Polyesterpolyol der Fa. Bayer MaterialScience mit einem Hydroxylgehalt von 15,5%.

Desmophen XP 2488 ist ein verzweigtes (2<F<3) Polyesterpolyol der Fa. Bayer MaterialScience mit einem Hydroxylgehalt von 16,0%.

Desmophen VP LS 2328 ist ein lineares (F=2), kurzkettiges Polyesterpolyol der Fa. Bayer MaterialScience mit einem Hydroxylgehalt von 7,95%.

Dibutylzinndilaurat (DBTL) wurde von Acros Chemicals unter dem Namen Tinstab BL277 bezogen.

Alle Rohstoffe mit Ausnahme des Katalysators wurden vor Verwendung im Vakuum entgast, die Polyole zusätzlich getrocknet.

### Herstellung der Polyurethane

Wenn nicht anders angegeben wurden zur Herstellung der Polyurethane die beiden Komponenten (Polyisocyanat und Polyol) auf 50°C erwärmt, im Verhältnis 1,0:1,0 NCO:OH gemischt, der Katalysator in der angegebenen Menge zugegeben und die gesamte Masse in einem Speedmixer DAC 150.1 FVZ der Fa. Hauschild für 60 Sekunden bei 2750 min⁻¹ vermischt.

Anschließend wurde die Mischung in eine geeignete Form gegossen und im Ofen ausgehärtet. Dabei wurde folgendes Heizprogramm verwendet: 2 Stunden bei 50°C + 16 Stunden bei 100°C + 2 Stunden bei 150°C. Es wurden klare, transparente Formkörper erhalten.

**Tabelle 1: Erfindungsgemäße Beispiele**

| **PU-System** | **Shore D Härte** | **Tg** | **Transmission** |
|---|---|---|---|
| Desmodur N 3600,Glycerin, DBTL (0,01 Gew.-%) | 79 | 103°C | 91% |
| Desmodur N 3600,Glycerin, NCO:OH =1,2:1; DBTL (0,01 Gew.-%) | 78 | 84°C | 90% |
| Desmodur N 3600, TMP, DBTL (0,01 Gew.-%) | 82 | 116°C | 90% |
| Desmodur N 3600, Glycerin, TMP (50:50 Gew.%), DBTL (0,01 Gew.-%) | 74 | 109°C | 92% |
| Desmodur XP 2489, Glycerin, DBTL (0,01 Gew.-%) | 87 | 160°C | 89% |
| Desmodur N 3200, Glycerin, DBTL (0,01 Gew.-%) | 84 | 84°C | 91% |
| Desmodur N 3900, Glycerin, DBTL (0,01 Gew.-%) | 83 | 90°C | 87% |

Die in der Tabelle 1 aufgeführten erfindungsgemäßen Polyurethane weisen ein hohe mechanische Stabilität auf. Dies wird durch die jeweils über 70 liegenden Shore D Härten belegt. Darüber hinaus besitzen sie aber auch eine hohe thermische Belastbarkeit, was an den ermittelten Glasübergangstemperaturen >80 °C abzulesen ist. Zuletzt konnte durch die Messung der Transmission auch gezeigt werden, dass die hergestellten Polyurethane transparent sind und sich damit besonders gut für optische Anwendungen eignen.

**Tabelle 2: Vergleichsbeispiele**

| **PU-System** | **Shore D Härte** | **Tg** | **Transmission** |
|---|---|---|---|
| Desmodur N 3400, Glycerin, DBTL (0,01 Gew.-%) | 73 | 48°C | n.m. |
| Desmodur N 3600, Desmophen VP LS 2249/1, DBTL (0,01 Gew.-%) | 65 | 56°C | 93% |
| Desmodur N 3600, Desmophen XP 2488, DBTL (0,01 Gew.-%) | 79 | 54°C | 93% |
| Desmodur N 3600, Desmophen XP 2328, DBTL (0,01 Gew.-%) | 27 | 8°C | 93% |

Die in der Tabelle 2 gezeigten Vergleichsbeispiele verdeutlichen, dass wenn entweder die Polyisocyanat-Komponente eine NCO Funktionalität < 3 oder die Polyol-Komponente eine OH-Funktionalität < 3 bzw. einen OH-Gehalt < 25 Gew.-% aufweist, keine Polyurethane erhalten werden können, die gleichzeitig eine hohe mechanische Stabilität (Shore D), eine hohe thermische Belastbarkeit(Tg) und eine hohe Transparenz (Transmission) aufweisen.

## Patentansprüche

1. Polyurethan ausschließlich aufgebaut aus einer Polyisocyanat-Komponente und einer Polyol-Komponente, wobei die Polyisocyanat-Komponente aus einem oder mehreren Polyisocyanaten besteht und die Polyisocyanat-Komponente eine durchschnittliche NCO-Funktionalität pro Molekül von ≥ 3 aufweist und die Polyol-Komponente aus einem oder mehreren Polyolen besteht und die Polyol-Komponente eine durchschnittliche OH-Funktionalität pro Molekül von ≥ 3 und einen OH-Gehalt ≥ 25 Gew.-%. aufweist.

2. Polyurethan nach Anspruch 1, **dadurch gekennzeichnet, dass** die Polyisocyanat-Komponente eine durchschnittliche NCO-Funktionalität pro Molekül von ≤ 4 und / oder die Polyol-Komponente eine durchschnittliche OH-Funktionalität pro Molekül von ≤ 6 aufweist.

3. Polyurethan nach einem der Ansprüche 1 oder 2, **dadurch gekennzeichnet, dass** die Polyisocyanat-Komponente ausschließlich aus aliphatischen Polyisocyanaten besteht.

4. Polyurethan nach einem der Ansprüche 1 bis 3, **dadurch gekennzeichnet, dass** die Polyisocyanat-Komponente einen NCO-Gehalt ≥ 15 Gew.-% und ≤ 55 Gew.-%, bevorzugt von ≥ 18 Gew.-% und ≤ 50 Gew.-% und besonders bevorzugt von ≥ 20 Gew.-% und ≤ 30 Gew.-% aufweist.

5. Polyurethan nach einem der Ansprüche 1 bis 4, **dadurch gekennzeichnet, dass** wenigstens ein Polyisocyanat ein Biuret, ein Uretdion oder ein Trimer eines Di- oder Triisocyanats ist.

6. Polyurethan nach Anspruch 5, **dadurch gekennzeichnet, dass** das Di- oder Triisocyanat aus der Gruppe Hexandiisocyanat, Isophorondiisocyanat, Diisocyanatodicyclohexylmethan, Xylylendiisocyanat, Tetramethylxylylendiisocyanat, Trimethylhexandiisocyanat, hydriertes Xylylendiisocyanat, hydriertes Toluoldiisocyanat, Pentandiisocyanat oder 4-Isocyanatomethyl-1,8-octandiisocyanat ausgewählt ist.

7. Polyurethan nach einem der Ansprüche 1 bis 6, **dadurch gekennzeichnet, dass** die Polyol-Komponente einen OH-Gehalt ≥ 25 Gew.-% und ≤ 60 Gew.-%, bevorzugt von ≥ 30 Gew.-% und ≤ 60 Gew.-%, und besonders bevorzugt von ≥ 35 Gew.-% und ≤ 60 Gew.- aufweist.

8. Polyurethan nach einem der Ansprüche 1 bis 7, **dadurch gekennzeichnet, dass** das molekulare Verhältnis von Polyisocyanat zu Polyol so eingestellt wird, dass das Verhältnis der NCO-Gruppen zu OH-Gruppen im Bereich von 0,95:1,00 bis 1,20:1,00, bevorzugt im Bereich von 1,05:1,00 und besonders bevorzugt bei 1,00:1,00 liegt.

9. Verfahren zur Herstellung eines Polyurethans nach einem der Ansprüche 1 bis 8, **dadurch gekennzeichnet, dass** die Polyisocyanat-Komponente und die Polyol-Komponente vermischt und gegebenenfalls ein Katalysator hinzugegeben und gegebenenfalls erwärmt wird.

10. Verfahren nach Anspruch 9, **dadurch gekennzeichnet, dass** die Polyisocyanat-Komponente und die Polyol-Komponente vor dem Vermischen auf eine Temperatur von 30 bis 90 °C, bevorzugt von 35 bis 80 °C und besonders bevorzugt von 40 bis 60 °C erwärmt werden.

11. Verfahren nach einem der Ansprüche 9 oder 10, **dadurch gekennzeichnet, dass**, bezogen auf Summen der Massen der Polyisocyanat-Komponente und der Polyol-Komponente, 0,001 bis 0,100 Gew.-%, bevorzugt 0,002 bis 0,050 Gew.-% und besonders bevorzugt 0,005 bis 0,030 Gew.-% Katalysator hinzugegeben wird.

12. Verfahren nach einem der Ansprüche 9 bis 11, **dadurch gekennzeichnet, dass** als Katalysator eine Verbindung ausgewählt aus der Gruppe der Amine und Metallorganyle, bevorzugt aus der Gruppe der Zinnorganyle und der Bismutorganyle und besonders bevorzugt Dibutylzinndilaurat verwendet wird.

13. Optisches Element, enthaltend oder bestehend aus einem Polyurethan gemäß einem der Ansprüche 1 bis 8.

14. Optisches Element nach Anspruch 13, **dadurch gekennzeichnet, dass** es ein Lichtleiter, ein Lichtstreuer oder eine Linse ist.

15. Verwendung eines Polyurethans nach einem der Ansprüche 1 bis 8 zur Lichtleitung, Lichtstreuung und oder Lichtlenkung.
